# EUROPEAN PATENT APPLICATION

(11) **EP 4 770 034 A1**
(43) Date of publication of application: **01.07.2026**
(21) Application number: 24872809.9
(22) Date of filing: 13.09.2024
(51) Int. Cl.: H04L 41/14

(54) **METHOD AND APPARATUS FOR MANAGING SIGNALING DATA IN MOBILE COMMUNICATION SYSTEM**

(30) Priority: 25.09.2023 KR 20230128352
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); PARK, Jungshin, Suwon-si, Gyeonggi-do 16677 (KR)
(74) Representative: HGF
(86) International application number: PCT/KR2024/013963
(87) International publication number: WO 2025/071101

(57) **Abstract**

The present disclosure relates to a 5G or 6G communication system for supporting a higher data transmission rate. Specifically, disclosed in the present disclosure are a method and an apparatus for collecting, analyzing, and managing signaling data between network entities in an edge computing system.

## Description

### [Technical Field]

The disclosure relates to a mobile communication system (or a wireless communication system) and, more specifically, to a method and an apparatus for collecting and managing signaling data between network devices (or network entities) in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, as communication systems evolve, there is an increasing demand for effectively managing signaling data between network entities.

### [Disclosure]

### [Technical Problem]

There is a need for a method capable of collecting signaling-related data that may cause abnormal network operations that may occur during mobile communication network operations. Existing signaling overload control between two end network devices that directly communicate with each other is not suitable for responding to a rapid increase in signaling that occurs in a cascading manner. For example, when an abnormal situation occurs in which the same procedure is performed for multiple UEs or network functions or devices, signaling for all network functions or devices involved in the procedure may increase in a cascading manner. Accordingly, it may be difficult to induce a reduction in signaling by one-to-one overload control between the network functions or devices.

Therefore, the disclosure proposes a scheme capable of reducing signaling overload between network entities or network functions by collecting and analyzing network signaling data, thereby enabling efficient signaling processing.

### [Technical Solution]

A method according to an embodiment of the disclosure may include receiving a first control signal by a first network entity, processing the received first control signal, and transmitting, to a second network entity, a second control signal generated based on a result of the processing.

### [Advantageous Effects]

According to various embodiments of the disclosure, it is possible to collect and analyze signaling data between network entities, thereby preventing signaling overload between network entities or network functions.

### [Description of Drawings]

FIG. 1 illustrates a structure of a communication system to which the disclosure pertains.
FIG. 2 illustrates a process in which a network entity collects signaling data according to an embodiment proposed in the disclosure.
FIG. 3 illustrates a process in which a network entity collects signaling data from a service communication proxy (SCP) according to an embodiment proposed in the disclosure.
FIG. 4 illustrates a process of searching for and selecting an SCP to collect signaling data according to an embodiment proposed in the disclosure.
FIG. 5 illustrates a structure of a UE according to embodiments of the disclosure.
FIG. 6 illustrates a structure of a base station according to embodiments of the disclosure.
FIG. 7 illustrates a structure of a network function (or network entity) according to embodiments of the disclosure.

### [Mode for Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) or new radio (NR) standards are used for the sake of descriptive convenience. However, the disclosure is not limited by these terms and names, and may be applied in the same way to systems that conform other standards.

In the following description, a base station (BS) is an entity that allocates resources to terminals, and may be at least one of a radio access network (RAN) node, a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB".

A terminal may include a user equipment (UE), a mobile station (MS), a cellular phone, a smartphone, a computer, or a multimedia system capable of performing a communication function. Of course, examples of the base station and the terminal are not limited to those mentioned above.

In the disclosure, terms referring to network entities or network functions, network nodes, and entities of edge computing systems, terms referring to messages, terms referring to identification information, and the like are illustratively used for the sake of descriptive convenience. Therefore, the disclosure is not limited by the terms as described below, and other terms referring to subjects having equivalent technical meanings may also be used.

In particular, the disclosure may be applied to 3GPP NR (5th generation mobile communication standard). Also, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultramobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultrareliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with low latency (ultra-low latency) and high reliability (ultra-high reliability). For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. Moreover, based on determinations by those skilled in the art, the embodiments of the disclosure may also be applied to other communication systems through some modifications without significantly departing from the scope of the disclosure.

In the following description, the disclosure will be described using terms and names defined in the 5G system standards for the descriptive convenience, but the disclosure is not limited by these terms and names and may be applied in the same way to systems that conform other standards.

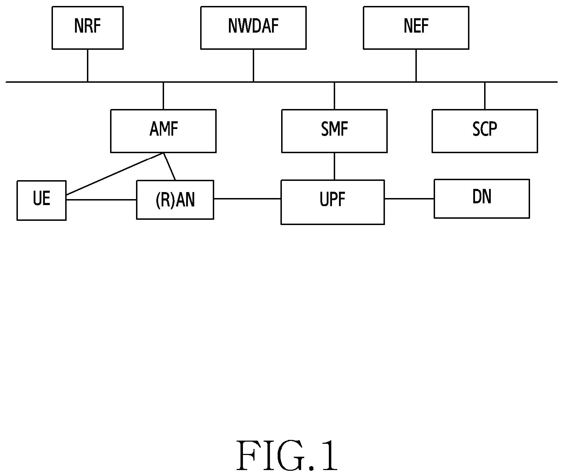

FIG. 1 illustrates a structure of a communication system related to the disclosure.

A 5G mobile communication system structure may include various network entities or network functions (NFs). FIG. 1 illustrates, as an example, some network entities or network functions, including an access and mobility management function (AMF), a session management function (SMF), a policy control function (PCF), a unified data management (UDM), a data network (DN) or a local part of a DN that is accessible locally, a user plane function (UPF), a (radio) access network ((R)AN), and a user equipment (UE).

Each NF may support the following functions, and the functions described below are only examples.
- The AMF provides functions for access and mobility management in units of UEs, and one UE may be connected to one AMF by default.
- The DN may refer to, for example, an operator service, Internet access, or a third-party (3rd party) service. The DN transmits a downlink protocol data unit (PDU) to the UPF or receives, from the UPF, a PDU transmitted from the UE. A local part of a DN refers to a portion of the DN that allows local access, thereby constituting a data network having a short data transmission path. The local part of the DN may be used to indicate a DN in which an edge application server supporting an edge computing service is deployed.
- The PCF provides a function of determining policies such as a mobility management policy and a session management policy by receiving information on a packet flow from an application server. Specifically, the PCF supports a unified policy framework to control network operations, provides policy rules so that control plane function(s) (e.g., AMF, SMF, etc.) can enforce policy rules, and implements a front end to access subscription information related to policy decisions in a unified data repository (UDR).
- The SMF provides a session management function, and when the UE has multiple sessions, the sessions may be managed by different SMFs for each session.
- The UDM stores subscription data of the user, policy data, and the like.
- The UPF forwards downlink PDUs, which are received from the DN, to the UE through the (R)AN, and forwards uplink PDUs received from the UE through the (R)AN to the DN. An uplink classifier (ULCL) refers to a UPF having a function of classifying an uplink and transmitting the same. The local UPF (L-UPF) performs the role of an end of session (i.e., a PDU session anchor) for a session transmitted to a local part of a DN.
- A network data analytics function (NWDAF) performs a role of collecting data within a network and providing an analysis service. The NWDAF may include logically separated functions such as a data collection function, a model training function, and an analysis service provision function, and each function may be deployed in the network as a single NWDAF instance. In addition, each function may provide an NWDAF service, and invocation of an NWDAF service between the functions is possible.
- A service communication proxy (SCP) may perform operations such as signaling transmission between network functions (supporting indirect communication between network functions), network function discovery, signaling communication security, and monitoring. Multiple SCPs may be distributed and deployed within a single mobile communication system. One SCP domain may be defined to include one or more SCPs and network function instances, and an SCP may communicate with all SCPs and network functions within the SCP domain to which the SCP belongs.

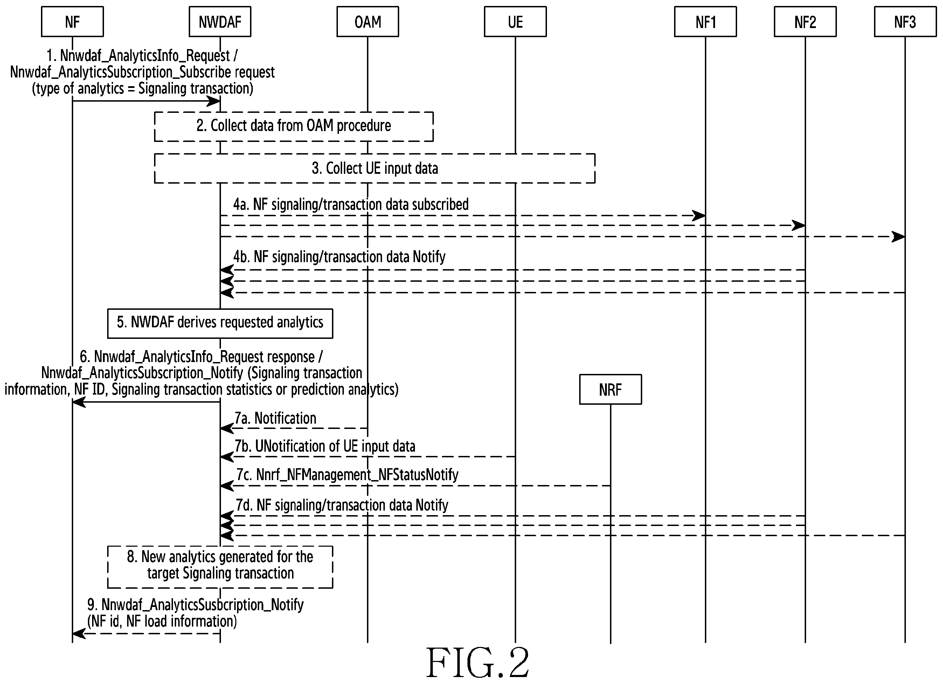

FIG. 2 illustrates a process in which a network entity collects signaling data according to an embodiment proposed in the disclosure.

In operation 1, an NF (i.e., an NWDAF consumer NF) may transmit an analysis service request message to the NWDAF. This message may be an Nnwdaf_AnalyticsInfo_Request message or an Nnwdaf_AnalyticsSubscription_subscribe request message. The analysis service request message may include information indicating that the analysis service request is related to signaling load, such as an analytics ID, which may be expressed as a signaling transaction or signaling load. In addition, the analysis service request message may include a target of analytics reporting and analytics filter information. The analysis service request message may include information indicating that at least one of statistics or prediction is requested, and may include a specific time window.

The analysis service request message may also include information indicating that analytics information regarding a signaling transaction occurring with respect to a specific network function service or procedure, such as an ID indicating a specific network function service name or network procedure name, is requested.

In operation 2, upon receiving the analysis service request message, the NWDAF may start a procedure for data collection with respect to an operations, administration, and maintenance (OAM; or orchestration and management) system. The information collected by the NWDAF from the OAM may include one or more types of information, such as the number of occurrences of NF signaling, NF resource usage (usage of assigned virtual resources currently in use for specific NF instance(s) (mean usage of virtual CPU, memory, and disk)), and NF resource configuration (life cycle changes of specific NF resources (e.g., NF operational or interrupted during reconfiguration of virtual or physical resources). In addition, the NWDAF may collect UE-related information (such as UE speed and UE orientation, which are collected through a minimization of drive tests (MDT) operation) from the OAM.

In operation 3, the NWDAF may perform collection of UE-related data. The NWDAF may collect UE data from the AF. The UE-related signaling transaction data collected by the NWDAF may include at least one of various parameters, such as signaling-related operations (e.g., information indicating specific operations, such as access and mobility management, session management, and UE configuration update), the number of signaling occurrences, and signaling time. For example, the NWDAF may invoke a service provided by the AF to provide an event ID, collective behavior, event filter information, a target of event reporting, and the like, and may receive UE-related data from the AF. In this case, the data provided by the AF is the UE data collected by the UE, and the UE data collected by the UE may be stored in the AF and provided to the NWDAF in response to a request from the NWDAF. According to another embodiment, the NWDAF may collect data through various paths. For example, the NWDAF may collect UE-related signaling data through signaling via an AMF or a user plane via a UPF.

In operation 4a, the NWDAF may determine an NF for which signaling transaction-related data is to be collected (e.g., NF1, NF2, and NF3 in the drawing) based on the information received in operation 1, and may transmit a relevant data provision request to each NF. For example, when the NWDAF receives a specific network function service, a procedure name, or an identifier in operation 1, the NWDAF may specify the network function providing the corresponding network function service or all network functions involved in the corresponding network procedure, thereby determining the network function(s) for which data is to be collected (e.g., NF1, NF2, and NF3 in the drawing). The NWDAF may transmit an NF signaling transaction data request message to the network function(s) for which data is to be collected, as determined as described above. The NF signaling transaction data request procedure may be performed in various ways. For example, the procedure may be performed by the NWDAF invoking an event exposure service provided by the network function(s) for data is to be collected, and by transmitting a subscription request for the service. To this end, each of the network functions may provide the NWDAF with a service capable of providing signaling transaction-related data.

In operation 4b, each network function having received a signaling transaction data collection request from the NWDAF may provide signaling transaction data to the NWDAF. Data provided to the NWDAF by each network function (NF1, NF2, and NF3 in the drawing) may include at least one of the following pieces of information.
- NF service name or ID, NF process name, or ID
- The number of signaling occurrences and time information related to a specific NF service or procedure
- Overload control occurrence information: The overload control occurrence information may include at least one of an NF subject to overload control, the number of times of overload control activation/performance, a time at which overload control is activated/performed, and overload control scope information (e.g., NF service, NF instance-level scope, NF set-level scope, etc.). Overload control performed by an NF may refer to an operation in which an NF service producer indicates or requests an NF service consumer to reduce service request signaling, based on a hypertext transfer protocol (HTTP) status code, or induces a reduction of notification signaling by the NF service producer.

In operation 5, the NWDAF may generate signaling transaction analytics by using data collected from the preceding operation. For example, the NWDAF may analyze collected data to generate signaling transaction statistics, or perform signaling transaction prediction by training a machine learning model using the collected data.

In operation 6, the NWDAF may provide information regarding the statistics or prediction analytics generated in the preceding operation to the NWDAF consumer NF. This process may be performed through transmission of an Nnwdaf_AnalyticsInfo_Request response message or an Nnwdaf_AnalyticsSubscription_Notify message.

In operations 7a to 7d, when the NWDAF has performed a subscription request for data collection through the operations 2 to 4 above, the NWDAF may receive notification of updated data related to signaling transactions from the UE, the OAM, and the NFs.

In operation 8, the NWDAF may update the statistics or prediction analytics generated in operation 5, based on the update data received in the preceding operation.

In operation 9, the NWDAF may provide the updated signaling transaction analytics to the NWDAF consumer NF. This process may be performed through the transmission of the Nnwdaf_AnalyticsSubscription_Notify message.

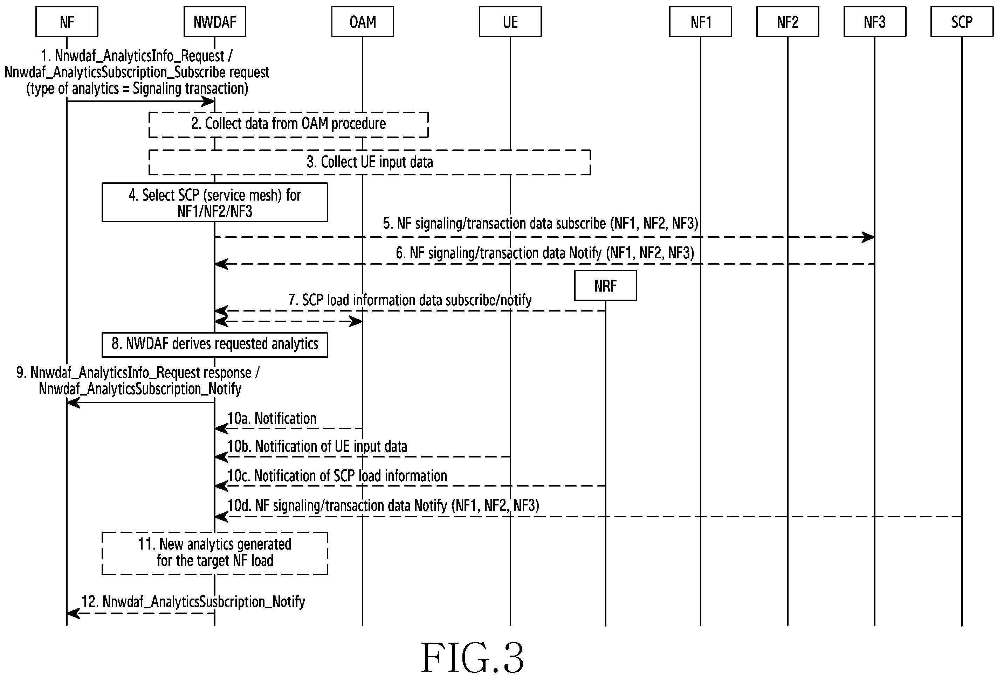

FIG. 3 illustrates a process in which a network entity collects signaling data from an SCP according to an embodiment of the disclosure.

In operation 1, an NWDAF consumer NF may transmit an analysis service request message to an NWDAF. This message may be an Nnwdaf_AnalyticsInfo_Request message or an Nnwdaf_AnalyticsSubscription_subscribe request message. The analysis service request message may include information indicating that the analysis service request is related to a signaling load, such as an analytics ID, which may be expressed as a signaling transaction or signaling load. In addition, the analysis service request message may include a target of analytics reporting and analytics filter information. The analysis service request message may include information indicating that at least one of statistics or prediction is requested, and may include a specific time window.

The analysis service request message may further include information indicating a request for analytics information regarding a signaling transaction occurring with respect to a specific network function service or procedure, such as an ID indicating a name of the specific network function service or a name of the network procedure.

In operation 2, upon receiving the analysis service request message, the NWDAF may start a procedure for data collection with respect to an OAM system. The information collected by the NWDAF from the OAM may include one or more types of information, such as the number of occurrences of NF signaling, NF resource usage (usage of assigned virtual resources currently in use for specific NF instance(s) (mean usage of virtual CPU, memory, and disk)), and NF resource configuration (life cycle changes of specific NF resources (e.g., NF operational or interrupted during reconfiguration of virtual/physical resources)). In addition, the NWDAF may collect UE-related information (such as UE speed and UE orientation, which are data collected through a minimization of drive tests (MDT) operation) from the OAM.

In operation 3, the NWDAF may perform collection of UE-related data. The NWDAF may collect UE data from an AF. UE-related signaling transaction data collected by the NWDAF may include at least one of various parameters, such as signaling-related operations (information indicating specific operations, such as access and mobility management, session management, and UE configuration update), and information about the number of signaling occurrences and signaling time. For example, the NWDAF may invoke a service provided by the AF to provide an event ID, collective behavior, event filter information, a target of event reporting, and the like, and may receive UE-related data from the AF. In this case, the data provided by the AF is UE data collected by the UE, and the UE data collected by the UE may be stored in the AF and provided to the NWDAF in response to a request from the NWDAF. According to another embodiment, the NWDAF may collect data through various paths. For example, the NWDAF may collect UE-related signaling data through signaling via an AMF or through a user plane via a UPF.

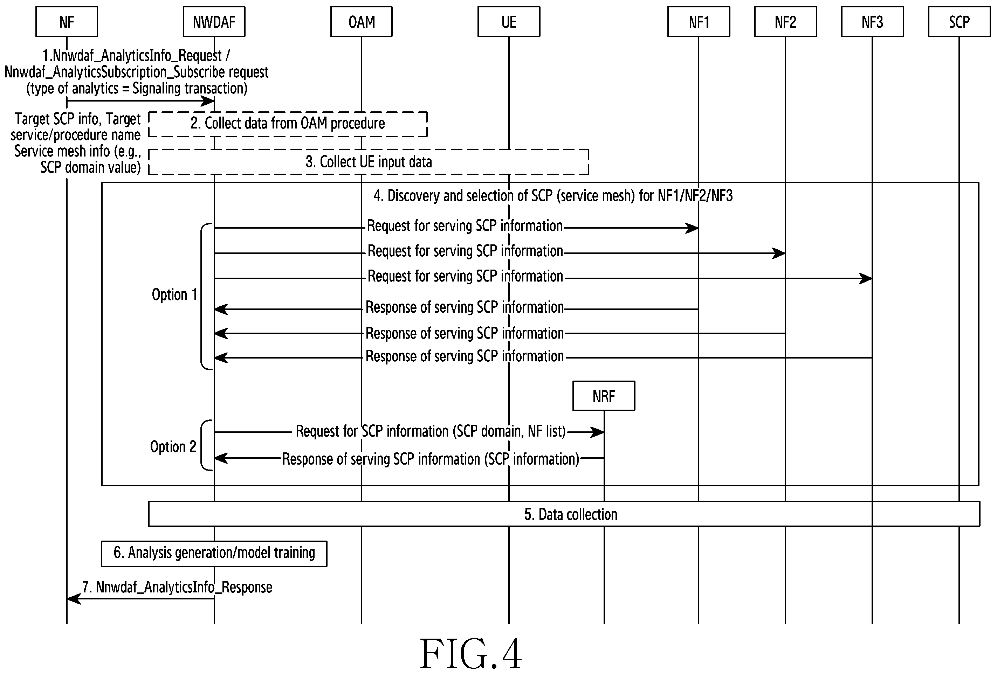

In operation 4, the NWDAF may determine the network function(s) for which signaling transaction-related data is to be collected (e.g., NF1, NF2, and NF3 in the drawing), based on the information received in operation 1, and may identify whether an SCP is deployed and used. For example, the NWDAF may use information configured in the NWDAF or collect information regarding NF1, NF2, and NF3 from the NRF to determine whether a service mesh is configured and in use, or whether an SCP is used for the network function(s) for which data is to be collected. The NWDAF may identify whether an SCP is used for the network function(s) for which data is to be collected (or for an NF service or procedure for signaling transaction analytics), and may perform discovery and selection of the corresponding SCP. The SCP discovery and selection operation of the NWDAF will be described in detail in FIG. 4.

In operation 5, the NWDAF may transmit an NF signaling transaction data request message to the SCP selected in the preceding operation. The request message may include at least one of information on the NF(s) for which data is to be collected (e.g., NF1, NF2, and NF3 in the drawings), and an ID indicating a specific network function service name or a network procedure name. This is to inform the SCP that the NWDAF is requesting collection of data regarding a signaling transaction occurring with respect to a specific network function service or procedure.

The data provided by the NWDAF to the SCP for data collection may include at least one of the following pieces of information, and a plurality of the pieces of information exemplarily described below may be included. Each of the pieces of information described below may be used as a filter for selectively obtaining information collected by the SCP.
- NF information (e.g., NF identifier and address information)
- NF service name or ID, NF procedure name, or ID
- SCP domain information or service mesh information
- The number of signaling occurrences and time information related to a specific NF service or procedure
- A request for overload control occurrence information

In operation 6, the SCP may transmit, to the NWDAF, at least one of the following pieces of information, which is signaling transaction-related data, in response to a request from the NWDAF.
- NF information (e.g., an NF identifier and address information)
- NF service name or ID, NF procedure name, or ID
- SCP domain information or service mesh information
- The number of signaling occurrences and time information related to a specific NF service or procedure
- Overload control occurrence information: The overload control occurrence information may include at least one of at least one of an NF subject to overload control, the number of times of overload control activation/performance, a time at which overload control is activated/performed, and overload control scope information (e.g., NF service, NF instance-level scope, or NF set-level scope).

In operation 7, the NWDAF may collect SCP load information or SCP resource state information (SCP resource usage or SCP resource configuration), which are factors that may indirectly cause signaling transaction congestion, and the NWDAF may collect such information through an OAM or an NRF.

In operation 8, the NWDAF may generate signaling transaction analytics by using the data collected in the preceding operations. For example, the NWDAF may generate signaling transaction statistics by analyzing the collected data, or may perform signaling transaction prediction by training a machine learning model using the collected data.

In operation 9, the NWDAF may provide information regarding the statistics or prediction analytics generated in the preceding operation to the NWDAF consumer NF. This process may be performed through the transmission of an Nnwdaf_AnalyticsInfo_Request response message or an Nnwdaf_AnalyticsSubscription_Notify message.

In operations 10a to 10d, when the NWDAF has performed a subscription request for data collection through the operations 2 to 7 described above, the NWDAF may receive notification of updated data relating to signaling transactions from the UE, OAM, and SCPs.

In operation 11, the NWDAF may update the statistics or prediction analytics generated in operation 5, based on the update data received in the preceding operation.

In operation 12, the NWDAF may provide the updated signaling transaction analytics to the NWDAF consumer NF. Such a process may be performed through the transmission of an Nnwdaf_AnalyticsSubscription_Notify message.

FIG. 4 illustrates a process of searching for and selecting an SCP to collect signaling data according to an embodiment proposed in the disclosure.

In operation 1, an NWDAF consumer NF may transmit an analysis service request message to the NWDAF. This message may be an Nnwdaf_AnalyticsInfo_Request message or an Nnwdaf_AnalyticsSubscription_subscribe request message. The NWDAF consumer NF may transmit to the NWDAF, in addition to the information provided by the NWDAF as described in FIG. 3 or FIG. 4, at least one of information on a target SCP, information on a target service mesh, information on a target procedure, and SCP domain information, for acquiring analytics information related to the SCP.

In operation 2, the NWDAF may perform data collection from an OAM. The process in which the NWDAF collects data from the OAM may be the same as or similar to the embodiment described above with reference to FIG. 3.

In operation 3, the NWDAF may perform UE data collection. The process in which the NWDAF collects UE data may be the same as or similar to the embodiment described above with reference to FIG. 3.

In operation 4, the NWDAF may perform an SCP discovery and selection operation. For example, the NWDAF may determine the network function(s) to be analyzed (NF1, NF2, and NF3), and may perform an operation for selecting an SCP responsible for the corresponding network function(s).

According to an embodiment (option 1 of FIG. 4), the NWDAF may request and obtain serving SCP information from each of NF1, NF2, and NF3. The NWDAF may transmit a serving SCP information request message to NF1, NF2, and NF3, and each of the network functions may transmit configured serving SCP information (identifier and address information) to the NWDAF.

According to another embodiment (option 2 of FIG. 4), the NWDAF may provide information on NF1, NF2, and NF3 to the NRF, and may receive information on an SCP responsible for the corresponding NF(s) from the NRF. The NWDAF may transmit a network function service name or a network procedure name, SCP domain information, and an NF list to the NRF, and may receive SCP information in response thereto. According to an embodiment, the SCP information obtainable by the NWDAF from the NRF may refer to SCP profile information registered in the NRF. In this case, after being deployed in a core network, the SCP may perform an NRF registration procedure by transmitting a service request message such as an NF_Management_NFRegister message to the NRF, and may provide the NRF with at least one of SCP identifier and address information, information indicating whether an event exposure function is supported (such as whether a function of providing information collected by the SCP to other NFs is supported), SCP domain information, and an NF list (NF identifier and address list information).

In operation 5, the NWDAF may transmit a signaling transaction-related data request to the SCP by using the SCP information obtained through discovery in the preceding operation, and may receive signaling transaction-related data from the SCP. The process in which the NWDAF transmits a data request to the SCP and receives data from the SCP may be the same or similar to the embodiment described above with reference to FIG. 3.

In operation 6, the NWDAF may generate signaling transaction analytics, and this process may be the same or similar to the embodiment described above with reference to FIG. 3.

In operation 7, the NWDAF may provide information regarding the generated statistics or prediction analytics to the NWDAF consumer NF, and the embodiment described above with reference to FIG. 3 may be applied in the same or a similar manner.

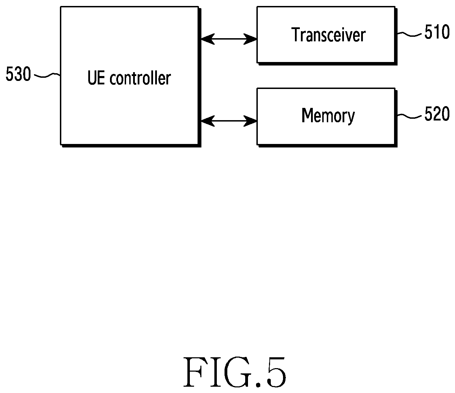

FIG. 5 illustrates a structure of a UE according to embodiments of the disclosure.

As illustrated in FIG. 5, the UE of the disclosure may include a transceiver 510, a memory 520, and a UE controller (or processor) 530. The UE controller 530, the transceiver 510, and the memory 520 may operate according to the above-described communication methods of the UE. However, components of the UE are not limited to the above-described example. For example, the UE may include a larger or smaller number of components than the above-described components. In addition, the UE controller 530, the transceiver 510, and the memory 520 may be implemented in the form of a single chip.

The transceiver 510 refers to a UE receiver and a UE transmitter as a whole, and may transmit/receive signals with base stations or network entities. The signals transmitted/received with base stations may include control information and data. To this end, the transceiver 510 may include a radio frequency (RF) transmitter configured to up-convert and amplify the frequency of transmitted signals, an RF receiver configured to low-noise-amplify received signals and down-convert the frequency thereof, and the like. However, this is only an embodiment of the transceiver 510, and the components of the transceiver 510 are not limited to the RF transmitter and the RF receiver.

Also, the transceiver 510 may include wired/wireless transceivers, and may include various components for transmitting/receiving signals. In addition, the transceiver 510 may receive signals through a radio channel, output the same to the UE controller 530, and transmit signals output from the UE controller 530 through the radio channel. Furthermore, the transceiver 510 may receive communication signals, output same to the UE controller 530, and transmit signals output from the UE controller 530 to base stations or network entities through a wired/wireless network.

The memory 520 may store programs and data necessary for the operation of the UE. In addition, the memory 520 may store control information or data included in signals acquired by the UE. The memory 520 may include storage media such as a ROM, a RAM, a hard disk, a CD-ROM, and a DVD, or a combination of storage media.

The UE controller 530 may control a series of processes so that the UE can operate according to the above-described embodiments of the disclosure. The UE controller 530 may include one or more processors. For example, the UE controller 530 may include a communication processor (CP) configured to perform control for communication, and an application processor (AP) configured to control upper layers such as application programs.

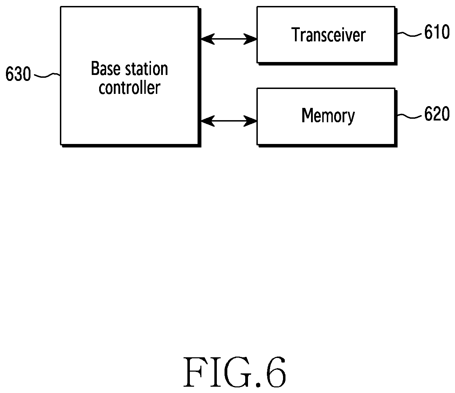

FIG. 6 illustrates a structure of a base station according to embodiments of the disclosure. The base station illustrated in FIG. 6 may correspond to the radio access node (RAN) described above in FIGS. 1 to 4.

As illustrated in FIG. 6, the base station of the disclosure may include a transceiver 610, a memory 620, and a base station controller (or processor) 630. The base station controller 630, the transceiver 610, and the memory 620 of the base station may operate according to the above-described communication methods of the base station. However, components of the base station are not limited to the above-described example. For example, the base station may include a larger or smaller number of components than the above-described components. According to an embodiment, the overall function of the base station of FIG.69 may be divided into functions implemented by a CU and a DU, and in this case, the CU and DU may each perform a part of the function performed by the base station of FIG. 6. In addition, the base station controller 630, the transceiver 610, and the memory 620 may be implemented in the form of a single chip.

The transceiver 610 refers to a base station receiver and a base station transmitter as a whole, and may transmit/receive signals with UEs and/or network devices. The transmitted/received signals may include control information and data. To this end, the transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver. The transceiver 610 may include wired/wireless transceivers, and may include various components for transmitting/receiving signals.

In addition, the transceiver 610 may receive signals through a communication channel (e.g., a radio channel), output the same to the base station controller 630, and transmit signals output from the base station controller 630 through the communication channel. Furthermore, the transceiver 610 may receive communication signals, output same to the processor, and transmit signals output from the processor to UEs or network entities through a wired/wireless network.

The memory 620 may store programs and data necessary for operations of the base station. In addition, the memory 620 may store control information or data included in signals acquired by the base station. The memory 620 may include storage media such as a ROM, a RAM, a hard disk, a CD-ROM, and a DVD, or a combination of storage media.

The base station controller 630 may control a series of processes so that the base station can operate according to the above-described embodiments of the disclosure. The base station controller 630 may include one or more processors. Methods disclosed in the claims or methods according to the embodiments described in the specification of the disclosure may be implemented by hardware, software, or a combination of hardware and software.

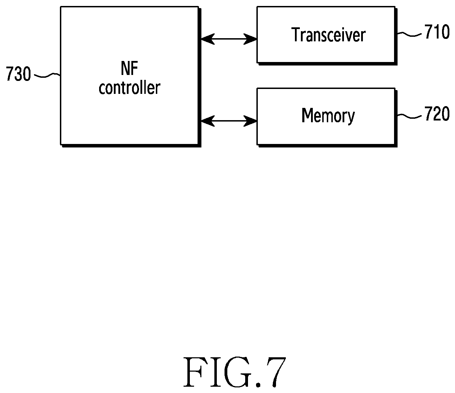

FIG. 7 illustrates a structure of a network function (or network entity) according to embodiments of the disclosure. The network function (or network entity) illustrated in FIG. 7 may correspond to various functions or entities of the core network described above in FIGS. 1 to 4.

As illustrated in FIG. 7, the network function (NF) (or network entity (NE)) of the disclosure may include a transceiver 710, a memory 720, an NF controller (or processor) 730. The NF controller 730, the transceiver 710, and the memory 720 of the NF (or NE) may operate according to the above-described communication methods of the NF (or NE). However, components of the NF (or NE) are not limited to the above-described example. For example, the NF (or NE) may include a larger or smaller number of components than the above-described components.

The transceiver 710 refers to an NF (or NE) receiver and an NF (or NE) transmitter as a whole, and may transmit/receive signals with UEs, base stations, and/or other NFs (or NEs). The transmitted/received signals may include control information and data. To this end, the transceiver 710 may communicate with nodes or base stations of the core network via wired or wireless transceivers. However, this is only an example of the transceiver 710, and the transceiver 710 may also include an RF transmitter configured to up-convert and amplify the frequency of transmitted signals, an RF receiver configured to low-noise-amplify received signals and down-convert the frequency thereof, etc., and may include various components for signal transmission or reception.

In addition, the transceiver 710 may receive signals through a communication channel (e.g., a radio channel), output same to the NF controller 730, and transmit signals output from the NF controller 730 through the communication channel. Furthermore, the transceiver 710 may receive communication signals, output same to the NF controller 730, and transmit signals output from the NF controller 730 to UEs, base stations, or network entities through a wired/wireless network.

The memory 720 may store programs and data necessary for operations of the NF (or NE). In addition, the memory 720 may store control information or data included in signals acquired by the NF (or NE). The memory 720 may include storage media such as a ROM, a RAM, a hard disk, a CD-ROM, and a DVD, or a combination of storage media.

The NF controller 730 may control a series of procedures so that the NF (or NE) can operate according to the aforementioned embodiments of the disclosure. The NF controller 730 may include one or more processors. Methods disclosed in the claims or methods according to the embodiments described in the specification of the disclosure may be implemented by hardware, software, or a combination of hardware and software.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

## Claims

1. A method performed by a network data analytics function (NWDAF) entity in a wireless communication system, the method comprising:
receiving, from a first network function entity, a first message for requesting an analysis service;
selecting a service communication proxy (SCP) entity;
transmitting, to the selected SCP entity, a second message for requesting data related to a signaling transaction;
receiving, from the selected SCP entity, a third message including the data related to the signaling transaction;
generating an analysis result, based on the data related to the signaling transaction; and
transmitting, to the first network function entity, a fourth message including the analysis result.

2. The method of claim 1, wherein the selecting of the SCP entity comprises:
requesting, from a second network function entity, information about the SCP entity related to the second network function entity; and
receiving, from the second network function entity, the information about the SCP entity.

3. The method of claim 1, wherein the selecting of the SCP entity comprises:
requesting, from a network repository function (NRF) entity, information about the SCP entity related to a second network function entity; and
receiving, from the NRF entity, the information about the SCP entity.

4. The method of claim 1, wherein the second message comprises at least one of information about a network function entity to be analyzed, information about a service of a network function, information about a network procedure, SCP domain information, service mesh information, information about a number of signaling occurrences and signaling time, or information about occurrence of overload control.

5. The method of claim 1, further comprising receiving, from an operations, administration, and maintenance (OAM), information about a terminal,
wherein the information about the terminal comprises information about speed and direction of the terminal.

6. The method of claim 1, wherein the first message comprises information indicating a request for an analysis service associated with a signaling transaction.

7. A method performed by a service communication proxy (SCP) entity in a wireless communication system, the method comprising:
receiving, from a network data analytics function (NWDAF) entity, a first message for requesting data related to a signaling transaction; and
transmitting, to the NWDAF entity, a second message including the data related to the signaling transaction.

8. The method of claim 7, wherein the first message comprises at least one of information about a network function entity to be analyzed, information about a service of a network function, information about a network procedure, SCP domain information, service mesh information, information about a number of signaling occurrences and signaling time, or information about occurrence of overload control.

9. A network data analytics function (NWDAF) entity in a wireless communication system, the NWDAF entity comprising:
a transceiver; and
a controller connected to the transceiver,
wherein the controller is configured to:
receive, from a first network function entity, a first message for requesting an analysis service;
select a service communication proxy (SCP) entity;
transmit, to the selected SCP entity, a second message for requesting data related to a signaling transaction;
receive, from the selected SCP entity, a third message including the data related to the signaling transaction;
generate an analysis result, based on the data related to the signaling transaction; and
transmit, to the first network function entity, a fourth message including the analysis result.

10. The NWDAF entity of claim 9, wherein the controller is configured to:
request, from a second network function entity, information about the SCP entity related to the second network function entity; and
receive, from the second network function entity, the information about the SCP entity.

11. The NWDAF entity of claim 9, wherein the controller is configured to:
request, from a network repository function (NRF) entity, information about the SCP entity related to a second network function entity; and
receive, from the NRF entity, the information about the SCP entity.

12. The NWDAF entity of claim 9, wherein the second message comprises at least one of information about a network function entity to be analyzed, information about a service of a network function, information about a network procedure, SCP domain information, service mesh information, a number of signaling occurrences and signaling time, or information about occurrence of overload control.

13. The NWDAF entity of claim 9, wherein the controller is configured to receive, from an operations, administration, and maintenance (OAM) system, information about a terminal,
wherein the information about the terminal comprises information about speed and direction of the terminal.

14. A service communication proxy (SCP) entity in a wireless communication system, the SCP entity comprising:
a transceiver; and
a controller connected to the transceiver,
wherein the controller is configured to:
receive, from a network data analytics function (NWDAF) entity, a first message for requesting data related to a signaling transaction; and
transmit, to the NWDAF entity, a second message including the data related to the signaling transaction.

15. The SCP entity of claim 14, wherein the first message comprises at least one of information about a network function entity to be analyzed, information about a service of a network function, information about a network procedure, SCP domain information, service mesh information, a number of signaling occurrences and signaling time, or information about occurrence of overload control.
